# EUROPÄISCHE PATENTANMELDUNG

(11) **EP 1 357 384 A2**
(43) Veröffentlichungstag der Anmeldung: **29.10.2003**
(21) Anmeldenummer: 03090121.9
(22) Anmeldetag: 24.04.2003
(51) Int. Cl.: G01P 3/487, G01P 13/04, G01D 5/20

(54) **Umdrehungszähler**

(30) Priorität: 27.04.2002 DE 10219303
(71) Anmelder: Hübner Elektromaschinen AG, 10967 Berlin (DE)
(72) Erfinder: Wilhelmy, Lothar, 14195 Berlin (DE); Steuer, Christian, 13509 Berlin (DE)
(74) Vertreter: Grünecker, Kinkeldey, Stockmair & Schwanhäusser

(57) **Zusammenfassung**

Bei einem Umdrehungszähler mit einem an dessen Welle (1) schwenkbar gelagerten Magnettragarm (5) für zwei in Richtung der Längsachse der Welle (1) zueinander versetzte, gegenläufig gepolte Magnete (6, 7) sind im Abstand voneinander und von der Welle (1) um letztere herum Ringsegmente (8 - 13) angeordnet, von denen einige einstückig ausgebildet sind und einige aus jeweils zwei Teilsegmenten (z. B. 11a, 11b) bestehen, die um einen dem Versatz zwischen den Magneten (6, 7) angepassten Betrag zueinander versetzt sind und Spulen (22 - 27) tragen. Sowohl die Teilsegmente als auch die übrigen Ringsegmente sind magnetisch miteinander verbunden. Durch den Versatz zwischen den Teilsegmenten und den auf ihnen gelagerten Spulen wird der Einfluss von Störpotentialen auf die Spulen eliminiert, weil die in den Spulen induzierten Störspannungen sich gegenseitig aufheben.

## Beschreibung

Die Erfindung betrifft einen Umdrehungszähler mit einer Welle, an der ein um begrenzte Beträge schwenkbarer Magnettragarm gelagert ist, sowie mit mehreren im Abstand voneinander und von der Welle um diese herum angeordneten Spulen, in denen durch einen vom mit der Welle umlaufenden Magnettragarm ausgehenden Magnetfluss Induktionsspannungen induziert werden, wobei zur Erzielung ausreichend großer Induktionsspannungen im unteren Drehzahlbereich der Welle durch Änderungen der Magnetflussbahn schnelle Schwenkbewegungen in den Magnettragarm einleitbar sind.

Ein Umdrehungszähler der vorstehenden Art ist aus der DE 199 60 891 A1 bekannt. Bei dem bekannten Gerät trägt der im Zentrum der Stirnseite der Welle gelagerte Magnettragarm an seinem freien Ende einen Permanentmagneten, dessen Magnetisierung parallel zur Längsachse der Welle ausgerichtet ist und der während der Drehung der Welle mehrere auf einem Umkreis zur Welle angeordnete, ebenfalls parallel zur Wellenlängsachse magnetisierte, ortsfeste Permanentmagnete wechselnder Polarität passiert, zwischen denen Spulen angeordnet sind. Die Mitnahme des Armes durch die Welle erfolgt über jeweils eine von zwei einen Winkel zwischen sich einschließenden Anschlagkanten, die eine winkelmäßig begrenzte Schwenkbewegung des Armes gegenüber der Welle zulassen. Nähert sich der Magnet des Magnettragarmes dabei einem gegensinnig gepolten, ortsfesten Magneten, so kommt es zu einem Anziehungseffekt, der den Magnettragarm von der ihn mitnehmenden Anschlagkante in Richtung der gegenüberliegenden Anschlagkante in eine Position bewegt, in der die gegensinnnigen Pole (z. B. Nord- und Südpol) solange miteinander fluchten, bis die "nacheilende" Anschlagkante wieder gegen den Magnettragarm anschlägt und den armseitigen Magneten aus dem Anziehungsbereich des gegensinnigen Magneten über eine Spule zu einem gleichsinnigen, ortsfesten Magneten bewegt. Sobald der armseitige Magnet den ortsfesten, gleichsinnigen Magneten passiert hat, wird er von diesem abgestoßen und schlagartig an einer weiteren Spule vorbei in den Bereich eines wiederum gegensinnig gepolten, ortsfesten Magneten bewegt. Die schlagartige Bewegung erzeugt in der zweiten Spule eine beträchtliche Induktionsspannung, die eine Gewähr dafür bietet, dass auch bei langsamer Drehgeschwindigkeit der Welle eine zur Erzielung einwandfreier Messergebnisse ausreichende Mindestspannung induziert wird.

Die bekannte Anordnung vermag insofern nicht voll zu befriedigen, als der wechselnde Kontakt zwischen dem Magnettragarm und den Anschlagkanten bei mittleren Drehzahlen zu einer unerwünschten Geräuschentwicklung führt, die sich durch Ver-Verwendung geeigneter Materialien lediglich dämpfen lässt. Hinzu kommt, dass die Zahl der benötigten Magnete vergleichsweise groß ist und bei Umdrehungszählern mit einer hohlen Welle der Magnettragarm durch einen gesondert gelagerten Ring ersetzt werden muss.

Um die vorstehend aufgezeigten Unzulänglichkeiten zu eliminieren, ist in der älteren Anmeldung 101 51 096.9 bereits vorgeschlagen worden, anstelle einer Vielzahl von über den Umfang der Welle verteilten Magneten und Spulen eine die Welle umgebenden Ring und konzentrisch zu diesem angeordnete Ringsegmente vorzusehen, die über Stege mit dem Ring verbunden sind, wobei Ring, Ringsegmente und Stege aus magnetisch leitendem Material bestehen und ein Teil der Stege als Kerne von Spulen genutzt wird. Wie sich bei Versuchen mit der nicht vorveröffentlichten Konstruktion gezeigt hat, reagieren die Spulen empfindlich auf Störungen, die von der Welle ausgehen, deren Bewegungen erfasst werden sollen. Mit derartigen Störungen muss insbesondere bei Antrieben gerechnet werden, die mit einer elektromagnetisch betätigten Bremse ausgestattet sind.

Der Erfindung liegt die Aufgabe zugrunde, einen Umdrehungszähler der in Betracht gezogenen Art zu schaffen, der, wie der in der älteren Anmeldung beschriebene Umdrehungszähler, praktisch geräuschlos arbeitet, bei dem auf eine Vielzahl von über den Umfang der Welle verteilten Magneten verzichtet werden kann und bei dem zusätzlich der Einfluss von Störmagnetfeldern weitgehend eliminiert ist. Diese Aufgabe wird bei einem gattungsgemäßen Umdrehungszähler erfindungsgemäß dadurch gelöst, dass der Magnettragarm mit mindestens zwei in Richtung der Längsachse der Welle zueinander versetzten, gegenläufig gepolten Magneten versehen ist, dass im Abstand voneinander und von der Welle um diese herum magnetisch leitende Ringsegmente angeordnet sind, dass eine gleichmäßig über den Umfang der Welle verteilte Anzahl von Ringsegmenten mit Spulen ausgestattet ist, dass die mit Spulen ausgestatteten Ringsegmente aus jeweils zwei in Längsrichtung der Welle um einen dem Versatz zwischen den Magneten angepassten Betrag zueinander versetzten Teilsegmenten bestehen, während die übrigen Ringsegmente einstückig ausgebildet sind, und dass sowohl die Teilsegmente als auch die übrigen Ringsegmente jeweils magnetisch miteinander verbunden sind.

Der erfindungsgemäße Umdrehungszähler bietet den Vorteil, dass bei ihm die in einem dem Versatz zwischen den Magneten entsprechenden axialen Abstand voneinander angeordneten Teilsegmente von einem elektrischen Störpotential praktisch identisch beaufschlagt werden, so dass kein relevanter magnetischer Potentialunterschied zwischen ihnen auftritt. Sind die einzelnen Teilsegmente mit jeweils einem eine Spule tragenden Steg ausgestattet und die Stege eines Teilsegmentpaares über eine, beispielsweise von einem Ringabschnitt gebildete Brücke magnetisch miteinander verbunden, so heben sich die in den Spulen miteinander verbunden, so heben sich die in den Spulen induzierten Störspannungen wegen ihrer de facto - Gleichheit auf. Sind die Ringsegmente direkt über einen eine einzelne Spule tragenden Steg magnetisch miteinander verbunden, so wird wegen der de facto - Gleichheit der auf die Teilsegmente einwirkenden Störpotentiale in der Spule keine durch ein Störpotential bedingte Spannung erzeugt.

Weitere Merkmale und Einzelheiten der Erfindung ergeben sich aus den Unteransprüchen und der nachstehenden Beschreibung zweier in der beigefügten Zeichnung dargestellter Ausführungsformen der Erfindung. Es zeigen:
- Fig. 1: eine Frontansicht der wesentlichen Teile eines ersten Umdrehungszählers;
- Fig. 2: einen Schnitt längs der Linie II-II in Fig. 1;
- Fig. 3: einen Schnitt längs der Linie III-III in Fig. 1;
- Fig. 4: einen Schnitt längs der Linie IV-IV in Fig. 1;
- Fig. 5: die Frontansicht der wesentlichen Teile einer zweiten besonders kostengünstigen Ausführungsform der Erfindung;
- Fig. 6: eine Ansicht in Richtung der Pfeile VI-VI in Fig. 5;
- Fig. 7: einen Schnitt längs der Linie VII-VII in Fig. 6;
- Fig. 8.: ein vereinfachtes Schaltbild zur Auswertung der vom Umdrehungszähler gemäß Fig. 5 gelieferten Signale;
- Fig. 9: ein Diagramm, das die Höhe der von einem erfindungsgemäßen Umdrehungszähler in Abhängigkeit von seiner Drehzeit gelieferten Spannungsimpulse wiedergibt und
- Fig. 10a bis 10c: mehrere Diagramme einzelner Spannungsimpulse.

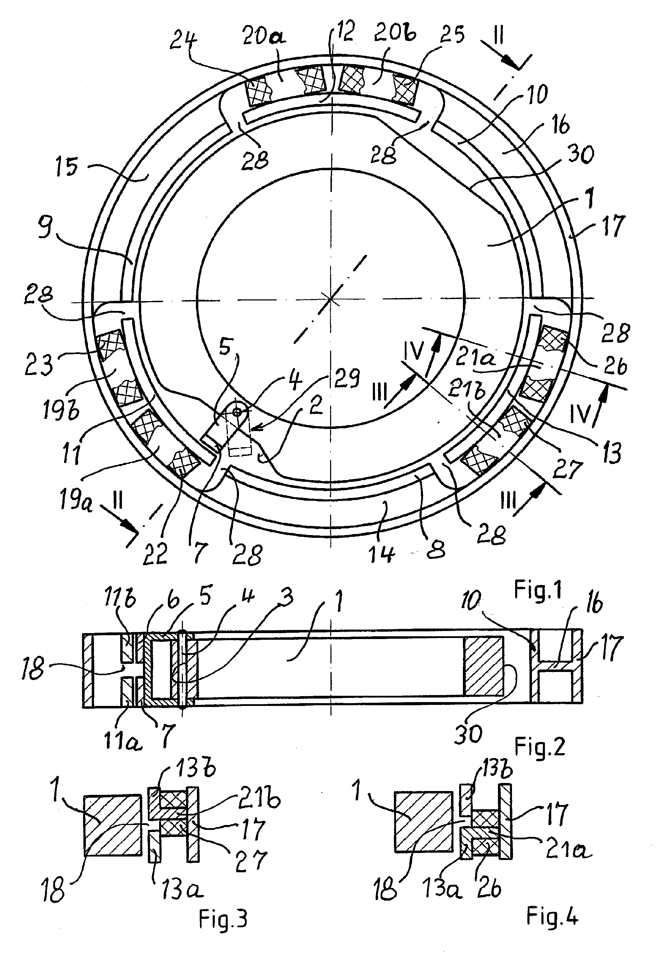

In der Figuren 1 und 2 ist 1 eine nach Art einer Nabe oder Hohlwelle ausgebildete Welle, die mit der Welle, deren Umdrehungen erfasst werden sollen, in bekannter, in der Zeichnung nicht dargestellter Weise verbunden ist.

Im Bereich einer Mulde 2 der Welle 1 weist letztere eine Bohrung 3 auf, in der schwenkbar ein Stift gelagert ist, dessen Enden mit den Schenkeln eines U-förmigen Bügels verbunden ist, der einen Magnettragarm 5 bildet und der im Bereich seines aus magnetisch leitendem Material bestehenden Joches zwei Magnete 6 und 7 trägt. Die Magnetfelder der Magnete 6 und 7 sind entgegengesetzt gerichtet, d. h., wenn der Nordpol des Magneten 6 radial nach außen weist, dann zeigt der Nordpol des Magneten 7 zum Joch bzw. zur Schwenkachse des Magnettragarmes 5.

Um die Welle herum sind mehrere magnetisch leitende Ringsegmente 8, 9, 10 und 11, 12, 13 angeordnet. Die Ringsegmente 8, 9, 10 sind über magnetisch leitende Stege 14, 15, 16 mit einem ebenfalls magnetisch leitenden Außenring 17 verbunden, der von einem Teil der Außenwand des Gehäuses des Umdrehungszählers gehalten oder auch gebildet werden kann.

Während die Ringsegmente 8 bis 10 einstückig ausgebildet sind, bestehen die Ringsegmente 11 bis 13 - wie am Beispiel des Ringsegmentes 11 in Figur 2 gezeigt - aus jeweils zwei Teilsegmenten a und b, d. h. im Falle des Ringsegmentes 11 aus den in Figur 2 dargestellten Teilsegmenten 11a und 11b und im Falle des Ringsegmentes 13 aus den in den Figuren 3 und 4 erkennbaren Teilsegmenten 13a und 13b, wobei die Teilsegmente - wie aus den Figuren 2 bis 4 entnehmbar ist - jeweils einen Spalt 18 zwischen sich einschließen, dessen Breite praktisch gleich dem Abstand zwischen den Magneten 6 und 7 entspricht.

Die einzelnen Teilsegmente der Ringsegmente 11 bis 13 sind wie die Ringsegmente 8 bis 9 über magnetisch leitende Stege 19a, 19b, 20a, 20b und 21a, 21b mit dem Außenring 17 verbunden. Anders als die Stege 14, 15, 16 werden die Stege 19a bis 21b als Kerne von Spulen 22 bis 27 genutzt, die in Fig. 1 aufgebrochen dargestellt sind, um die Stege 19a bis 21b besser erkennbar zu machen.

Aufgrund der beschriebenen Anordnung und der Ausbildung der Magnete, Ringsegmente und Stege sowie des Außenringes werden durch die Magnete 6, 7 kräftige Magnetfelder erzeugt, die - wie in Figur 2 an einer Stelle dargestellt - z. B. zu einem magnetischen Nutzfluss vom Magneten 6 zum Teilsegment 11 b, von letzterem über den Steg 19a, den Außenring 17 und den Steg 19b zum Teilsegment 11a und zum Magneten 7 sowie von diesem über das Joch des Magnettragarmes 5 zurück zum Magneten 6 führen. Die von dem jeweiligen Magnetfeld durchströmten Wicklungen der Spulen sind elektrisch so miteinander verbunden, dass die in ihnen induzierten Spannungen sich addieren. Anders als der beschriebene Nutzfluss fließt ein eventueller magnetischer Störfluss gleichsinnig durch die in den Figuren 3 und 4 dargestellten Stege 21a und 21b und die auf diesen angeordneten Wicklungen der Spulen 26 und 27, so dass die vom Störfluss induzierten Spannungen einander entgegengesetzt gerichtet sind und sich folglich aufheben, d. h. das Messergebnis nicht beeinflussen.

Infolge der jeweils gleichbreiten Spalte 28 zwischen den aufeinander folgenden Ringsegmenten 8 bis 13 kommt es bei niedrigen Umdrehungen der Welle 1 zu dem bereits in der eingangs erwähnten älteren Anmeldung erzielten Effekt, wonach der Magnettragarm 5 bei Annäherung z. B. an den Spalt 28 zwischen dem Ringsegment 8 und dem Ringsegment 11 bestrebt ist, am Ringsegment 8 "kleben" zu bleiben. Er wird folglich aus einer zuvor von ihm eingenommenen radial nach außen gerichteten Lage herausgeschwenkt und in die in Figur 1 gestrichelte Position 29 überführt. Dabei vergrößert sich der Abstand zwischen den Magneten 6, 7 und dem Ringsegment 8. Sobald der Streufluss der Magnete 6, 7 zum Ringsegment 11 soweit angewachsen ist, dass die Anziehungskräfte im Verhältnis zum Ringsegment 11 gegenüber den Haltekräften im Verhältnis zum Ringsegment 8 überwiegen wird der Magnettragarm 5 schlagartig wieder in eine gestreckte radial nach außen gerichtete Lage zurückgeschwenkt. Der Lagewechsel aus der abgewinkelten "Schrägstellung" in die gestreckte "Radialstellung" hat einen spontanen Anstieg des magnetischen Flusses in den Teilsegmenten 11 a und 11 b des Ringsegmentes 11 zur Folge und bietet die Gewähr dafür, dass auch bei langsamen Drehzahlen hinreichend große Spannungen in den Spulen 22, 23 induziert werden.

Zur Vermeidung von Unwuchterscheinungen weist die Welle an ihrer der Mulde 2 gegenüberliegenden Seite eine Abflachung 30 auf.

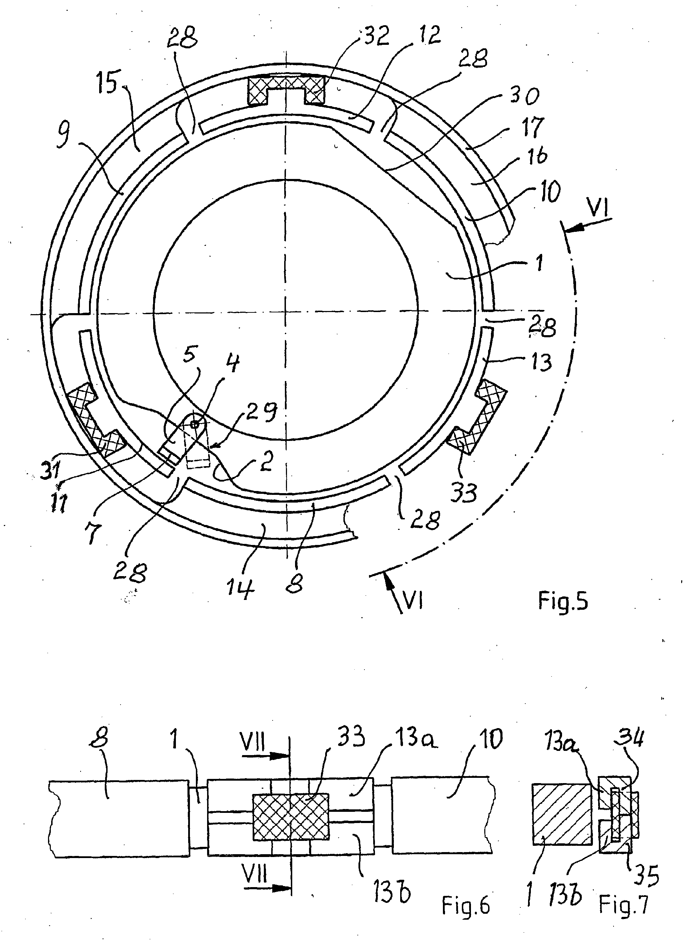

Der Aufbau des Umdrehungszählers gemäß den Figuren 5 bis 7 entspricht weitgehend dem Aufbau des Umdrehungszählers gemäß den Figuren 1 bis 4. Für gleiche Teile werden daher gleiche Bezugszeichen verwendet.

Anders als bei der zuvor beschriebenen Ausführungsform werden zur Erzielung befriedigender Messergebnisse bei der zweiten Ausführungsform jedoch nicht dreimal zwei gleich sechs Spulen, sondern insgesamt nur drei Spulen 31, 32 und 33 benötigt. In diesem Fall sind die Teilsegmente 11, 12 und 13, wie in den Figuren 6 und 7 am Beispiel der Teilsegmente 13a und 13b erkennbar, nicht mit dem Außenring 17, sondern über L-förmige Stege 34, 35 miteinander verbunden. Auch in diesem Fall heben sich wegen der identischen Formgebung der jeweiligen Teilsegmente Störeinflüsse auf die Spulen auf, während der Nutzfluss der Magnete des Magnettragarmes 5 zur Signalerzeugung genutzt werden kann.

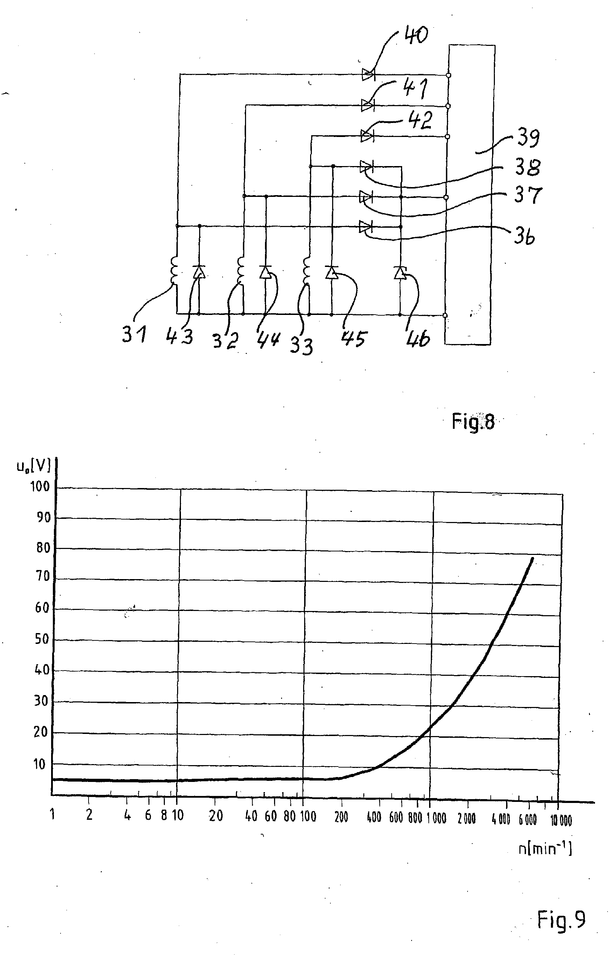

Die Auswertung der von den Spulen 31 bis 33 gelieferten Signale erfolgt in der gleichen Weise wie in der älteren Anmeldung beschrieben und wird nachstehend nochmals anhand der Figur 8 erläutert.

Die in den Wicklungen der Spulen 31, 32, 33 nacheinander induzierten Spannungen gelangen über Dioden 36, 37, 38 zu einer Auswerteelektronik 39. Zusätzlich wird mit den Spannungsimpulsen über die Dioden 40, 41, 42 ein nicht gezeichnete Mikroprozessor der Auswerteelektronik 39 beaufschlagt. Der Mikroprozessor fragt den nicht-flüchtig abgespeicherten, d. h. den auch im spannungslosen Zustand festgehaltenen Zählerstand über die Anzahl der bereits aufgelaufenen Impulse ab und addiert bei Rechtsdrehung der Welle 1 und sich im Uhrzeigersinn bewegenden Magnettragarm 5 jeweils einen Zählimpuls pro Spannungsimpuls hinzu. Umgekehrt wird der Zählerstand um jeweils einen eine Drittel Umdrehung entsprechenden Schritt herabgesetzt, wenn auf den vorhergehenden Spannungsimpuls ein vom entgegen den Uhrzeigersinn umlaufenden Magnetarm 5 in einer Wicklung erzeugter Spannungsimpuls folgt.

Negative Impulse, die auftreten, wenn der Magnettragarm 5 mit seinen Magneten 6 und 7 jeweils eines der mit einer Spule ausgestatteten Ringsegmente verlässt, werden von sogenannten Leerlaufdioden 43 bis 45 unterdrückt, d. h., es werden nur positive Spannungsimpulse in der Auswerteelektronik 39 ausgewertet.

Eine Z-Diode 46 begrenzt die Spannungsimpulse auf einen für die Auswerteelektronik geeigneten Wert, sobald die zu erfassenden Drehzahlen auf Werte ansteigen, die Schwenkbewegungen des Magnettragarmes 5 im Bereich der Spalte 28 nicht nur überflüssig, sondern auch unmöglich machen, weil der Magnettragarm 5 infolge der auf ihn einwirkenden Fliehkraft seine in Figur 5 in Volllinien dargestellte gestreckte Position beibehält. Während mit steigender Drehzahl die in den Wicklungen der Spulen 31, 32, 33 induzierten Spannungen zunehmen, nimmt die Zeit, während der sie anfallen, ab.

Der durch die die Höhe der induzierten Spannungen begrenzende Z-Diode 46 fließende Strom baut in der jeweiligen Wicklung ein magnetisches Feld auf, dessen Energie bei abklingenden Spannungsimpulsen zu einer Verlängerung der Impulsdauer führt. Die Spannungsimpulse werden also nicht nur in ihrer Höhe begrenzt, sondern auch in ihrer Breite verlängert, so dass sie auch bei hohen Drehzahlen genügend lange zur Verfügung stehen, um die Auswerteelektronik 39 solange mit Energie zu versorgen, bis ihr Mikroprozessor den neuen Zählerwert verarbeitet und in seinem nicht-flüchtigen Speicher abgelegt hat. Eine gewisse Bedeutung kommt in diesem Zusammenhang der Relation zwischen den Längen der Ringsegmente 8, 9, 10 und den Längen der Ringsegmente 11, 12, 13 zu. Anders als bei der in der älteren Anmeldung offenbarten Lösung beträgt die Länge der Ringsegmente 11, 12, 13 zweckmäßigerweise mindestens 70 % der Länge der Ringsegmente 8, 9, 10. Dadurch, dass die Ringsegmente 11, 12, 13 aus massivem Weicheisen bestehen, wird ihre Magnetisierung bei hohen Drehzahlen durch die in ihnen induzierten Wirbelströme verlangsamt. Der während der gesamten Zeit, die der Magnettragarm 5 benötigt, um von einem Ende bis zum anderen Ende des jeweiligen Ringsegmentes 11 bzw. 12 bzw. 13 zu gelangen, stattfindende Magnetisierungsprozess ist mit einer gewissen Flussänderung verbunden, die groß genug ist, um in den Wicklungen der Spulen 31, 32, 33 fortwährend eine für die Auswerteelektronik 39 ausreichende Spannung zu erzeugen. Die von der Z-Diode 46 verursachte Energiespeicherung in den Spulen 31 bis 33 wird durch diese Maßnahme unterstützt. Entsprechendes gilt selbstverständlich auch für die zuerst beschriebene Ausführungsform der Erfindung.

Besondere Speichermedien in Form von Kondensatoren oder dergleichen erweisen sich folglich als überflüssig. Fig. 9 zeigt die Höhe der in den Spulen 31 bis 33 induzierten Spannungsimpulse in Abhängigkeit von der Drehzahl der Welle 1. Bis zu einer Drehzahl von etwa 200 Umdrehungen pro Minute sind die erzeugten Spannungsimpulse auf die Schwenkbewegungen des Magnettragarmes 5 zurückzuführen. Nach Überschreiten der vorgenannten Drehzahl halten die Fliehkräfte - wie bereits beschrieben - den Magnettragarm 5 in einer gestreckten Position und die Drehzahlen reichen aus, um hinreichend große Spannungsimpulse zu generieren, wobei die Größe der einzelnen Spannungsimpulse mit ansteigender Drehzahl zunimmt.

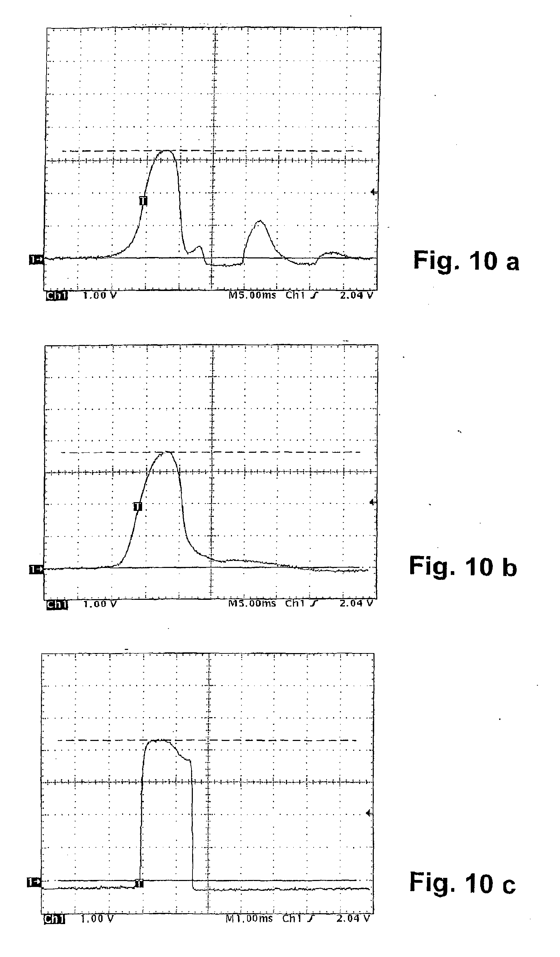

Einzelne, bei unterschiedlichen Drehzahlen auftretende Spannungsimpulse sind zur Abrundung des Bildes in den Figuren 10a bis 10c dargestellt, wobei Fig. 10a einen Spannungsimpuls bei einer Umdrehung pro Minute, Fig. 10b einen Spannungsimpuls bei 200 Umdrehungen pro Minute und Fig. 10c einen Spannungsimpuls bei 6000 Umdrehungen pro Minute zeigt. Sämtliche Spannungsimpulse wurden parallel zur Z-Diode 46 aufgenommen, d. h. im Gegensatz zu den Verhältnissen in Fig. 9 auf einen Amplitudenwert von ca. 3 Volt begrenzt.

In Fig. 10a ist ein zweiter abgeschwächter Spannungsimpuls erkennbar, der auf eine leichte Pendelbewegung des Magnetragarmes 5 zurückzuführen ist. Dieser zweite Impuls stört nicht, da nach der Auswertung des ersten Hauptimpulses schaltungsbedingt erst ein Spannungsimpuls der davor oder dahinter liegenden Spule auftreten muss, bevor ein Impuls der zwischen den jeweils benachbarten Spulen gelegenen Spule erneut gezählt wird. Der in Fig. 10a gezeigte zweite Impuls wird folglich ignoriert.

## Patentansprüche

1. Umdrehungszähler mit einer Welle (1), an der ein um begrenzte Beträge schwenkbarer Magnettragarm (5) gelagert ist, sowie mit mehreren im Abstand voneinander und von der Welle (1) um diese herum angeordneten Spulen (22 - 27; 31 - 33), in denen durch einen vom mit der Welle (1) umlaufenden Magnettragarm (5) ausgehenden Magnetfluss Induktionsspannungen induziert werden, wobei zur Erzielung ausreichend großer Induktionsspannungen im unteren Drehzahlbereich der Welle (1) durch Änderungen der Magnetflussbahn schnelle Schwenkbewegungen in den Magnettragarm (5) einleitbar sind, **dadurch gekennzeichnet, dass** der Magnettragarm (5) mit mindestens zwei in Richtung der Längsachse der Welle (1) zueinander versetzten, gegenläufig gepolten Magneten (6, 7) versehen ist, dass im Abstand voneinander und von der Welle (1) um diese herum magnetisch leitende Ringsegmente (8 - 13) angeordnet sind, dass eine gleichmäßig über den Umfang der Welle (1) verteilte Anzahl von Ringsegmenten (11 - 13) mit Spulen (22 - 27; 31 - 33) ausgestattet ist, dass die mit Spulen (22 - 27; 31 - 33) ausgestatteten Ringsegmente (11 - 13) aus jeweils zwei in Längsrichtung der Welle (1) um einen dem Versatz zwischen den Magneten (6, 7) angepassten Betrag zueinander versetzten Teilsegmenten (11a, 11b; 12a, 12b; 13a, 13b) bestehen, während die übrigen Ringsegmente (8 - 10) einstückig ausgebildet sind, und dass sowohl die Teilsegmente (11a, 11b; 12a, 12b; 13a, 13b) als auch die übrigen Ringsegmente (8 - 10) jeweils magnetisch miteinander verbunden sind.

2. Umdrehungszähler nach Anspruch 1, **dadurch gekennzeichnet, dass** die Magnete (6, 7) des Magnettragarmes (5) radial magnetisiert sind.

3. Umdrehungszähler nach Anspruch 1 oder 2, **dadurch gekennzeichnet, dass** der Magnettragarm (5) nach Art eines im Wesentlichen U-förmigen Bügels mit zwei im Bereich seines Joches angeordneten Magneten (6, 7) ausgebildet ist.

4. Umdrehungszähler nach Anspruch 3, **dadurch gekennzeichnet, dass** die Welle (1) im Bereich des Umfangs mit einer die Schwenkbewegungen des Magnettragarmes (5) begrenzenden Mulde (2) versehen ist.

5. Umdrehungszähler nach Anspruch 3 oder 4, **dadurch gekennzeichnet, dass** die Breite der Spalte (28) zwischen den in Umfangsrichtung der Welle (1) jeweils aufeinanderfolgenden Ringssegmenten (8 - 13) im Wesentlichen gleich der Breite des die Magnete (6, 7) tragenden Joches des Magnettragarmes (5) ist.

6. Umdrehungszähler nach einem der Ansprüche 1 bis 5, **dadurch gekennzeichnet, dass** er drei mit mindestens jeweils einer Spule (22 - 27 bzw. 31 - 33) versehene und aus jeweils zwei Teilsegmenten (a, b) bestehende Ringsegmente (11 - 13) und drei zwischen diesen gelegene einstückige Ringsegmente (8 bis 10) aufweist.

7. Umdrehungszähler nach Anspruch 6, **dadurch gekennzeichnet, dass** die Länge der mit den Spulen (21 - 27 bzw. 31 - 33) ausgestatteten Ringsegmente (11 - 13) kleiner ist als die Länge der spulenfreien Ringsegmente.

8. Umdrehungszähler nach Anspruch 6, **dadurch gekennzeichnet, dass** die Länge der mit den Spulen (22 - 27; 31 - 33) ausgestatteten Ringsegmente (11 - 13) mindestens 70 % der Länge der spulenfreien Ringsegmente (8 - 10) beträgt.

9. Umdrehungszähler nach einem der Ansprüche 1 bis 8, **dadurch gekennzeichnet, dass** sowohl die einstückigen Ringsegmente (8 - 10) als auch die Teilsegmente (a, b) der übrigen Ringsegmente (11 - 13) über mindestens jeweils einen magnetisch leitenden Steg (14 - 16 bzw. 19 - 21) mit einem die Ringsegmente (11 - 13) umschließenden magnetisch leitenden Außenring (17) verbunden sind.

10. Umdrehungszähler nach einem der Ansprüche 1 bis 8, **dadurch gekennzeichnet, dass** die einstückigen Ringsegmente (8 - 10) über jeweils einen magnetisch leitenden Steg (14 - 16) mit einem die Ringsegmente (8 - 10) umschließenden Außenring (17) verbunden sind, während die Teilsegmente (a, b) der übrigen Ringsegmente (11 - 13) über jeweils mindestens einen Steg (34, 35) nur jeweils miteinander verbunden sind.

11. Umdrehungszähler nach einem der Ansprüche 9 bis 10, **dadurch gekennzeichnet, dass** die die Teilsegmente (a, b) mit dem magnetisch leitenden Außenring (17) oder miteinander verbindenden Stege Kerne der Spulen (22 - 27; 31 - 33) bilden.
